# EUROPEAN PATENT SPECIFICATION

(11) **EP 0 962 651 B1**
(45) Date of publication and mention of the grant of the patent: **22.10.2003**
(21) Application number: 99110639.4
(22) Date of filing: 02.06.1999
(51) Int. Cl.: F02N 11/08

(54) **Vehicular engine stop control device**
Stopsteuervorrichtung eines Kraftfahrzeugsmotors
Dispositif de contrôle de l'arrêt d'un moteur de vehicule

(30) Priority: 04.06.1998 JP 15622998
(43) Date of publication of application: 08.12.1999
(73) Proprietor: TOYOTA JIDOSHA KABUSHIKI KAISHA, Aichi-ken 471-8571 (JP)
(72) Inventor: Atsushi, Tabata, c/o Toyota Jidosha K. K., Toyota-shi, Aichi-ken, 471-8571 (JP); Shuji, Nagano, c/o Toyota Jidosha K. K., Toyota-shi, Aichi-ken, 471-8571 (JP)
(74) Representative: Pellmann, Hans-Bernd, Dipl.-Ing.

(56) References cited:
- EP-A- 0 328 299
- EP-A- 0 766 002
- JP-A- 2 305 337
- JP-A- 59 173 559
- PATENT ABSTRACTS OF JAPAN vol. 096, no. 011, 29 November 1996 (1996-11-29) & JP 08 193531 A (NIPPONDENSO CO LTD), 30 July 1996 (1996-07-30)

## Description

### BACKGROUND OF THE INVENTION

### 1.Field of the Invention

The present invention relates to a vehicular engine stop control device and method according to the preambles of claims 1 or 8, respectively, wherein an engine is stopped automatically when predetermined engine stop conditions are met and wherein the engine that has been stopped automatically is restarted when predetermined engine restart conditions are met.

### 2.Description of the Related Art

For example, as a generic prior art, JP-A-8-193531 discloses a vehicle wherein if the vehicle stops running and predetermined engine stop conditions are met, an engine is stopped automatically so as to save fuel, reduce exhaust emission, attenuate noise or the like.

In such a vehicle, if predetermined engine restart conditions are met when a driver shows the intention of driving the vehicle by depressing an accelerator pedal, the engine is restarted immediately.

In a vehicle in which a hydraulic automatic transmission is installed, if an engine is stopped, an oil pump coupled to the engine is also stopped. For this reason, for example, oil that has been supplied to a forward clutch of the automatic transmission leaks out from an oil path, thereby causing a drop in hydraulic pressure. Therefore, in restarting the engine, the forward clutch, which should be engaged during a forward running state of the vehicle, is still disengaged.

Accordingly, in restarting the engine, a command to engage this clutch is also output simultaneously. However, until the clutch is engaged, an accelerator pedal is depressed, as it were, in a neutral state. Hence, the clutch is engaged when the engine is blowing up, whereby an engagement shock is caused. As a result, the amount of work done by the clutch increases, which may adversely affect the durability of the clutch.

In order to obviate such a problem, according to the art disclosed in the above-mentioned patent publication, when the engine is restarted on condition that the accelerator has been turned on in a stopped state of the engine, the opening degree of a throttle valve is limited until the engine speed reaches an idling speed, regardless of a depression amount of the accelerator. Thus, control for preventing an increase of engine torque (torque-down control) is performed.

However, in the case where the engine is restarted on condition that the accelerator is on, the engine restart reflects exactly the driver's intention to take off. In this case, if the torque-down control is performed unconditionally, a delay may arise at the time of takeoff. If the torque-down control is always performed, a great disadvantage such as a delay in taking off in response to an operation of the accelerator may be caused.

As a further state of the art, reference JP 59173559 A discloses a method for preventing a rapid increase of the number of revolutions of an engine, wherein from the starting time of an engine under full closing condition of a throttle valve, an amount of a chance in the number of revolutions of an engine is found at intervals of a given period, and ignition is made at an optimum ignition lead angle if the result is below a given value, and in a way to delay an ignition timing by a given angle if it exceeds the given value.

### SUMMARY OF THE INVENTION

In view of the above-described circumstances, the present invention aims at providing a vehicular engine stop control device and method capable of preventing a deterioration in durability of a clutch without adversely affecting responsibility at the time of takeoff.

The above-described object is achieved by combination of the features stated in the independent claims. The dependent claims disclose further advantageous implementations of the present invention.

According to the present invention, there is provided a vehicular engine stop control device wherein an engine is stopped automatically when predetermined engine stop conditions are met and wherein the engine that has been stopped automatically is restarted when predetermined engine restart conditions are met. This vehicular engine stop control device is characterized by comprising means for detecting whether or not the engine restart results from turning-on of an accelerator, means for detecting whether or not a vehicle is braked, and means for changing torque of the engine. The vehicular engine stop control device is further characterized in that torque-down control is performed so as to reduce torque of the engine in a case where the engine is restarted when one of the predetermined engine restart conditions is met, namely, on condition that the accelerator is on while the vehicle is braked.

If the engine is restarted on condition that the accelerator is on during automatic stoppage of the engine, the clutch starts being engaged immediately. However, until the engagement of the clutch is completed, the accelerator is depressed, as it were, in a neutral state. Hence, the engine may blow up and the torque transmitted to the clutch may increase. In order to avoid such a phenomenon, in the case where the engine is restarted on condition that the accelerator is on, the implementation of the torque-down control is considered. However, if the torque-down control is performed unconditionally as soon as the engine is restarted (every time the engine is restarted on condition that the accelerator is on), the operation of restoring the engine from the automatically stopped state is delayed, which provokes a sense of a delay in taking off in response to an operation of the accelerator.

Taking this fact into consideration, according to the present invention, the torque-down control is performed only when a high responsibility is not demanded in restarting the engine on condition that the accelerator is on during an automatically braked state of the engine (i.e., under a specially limited condition).

The present invention has been thought out by being focused on the fact that if torque has increased during blow-up of the engine especially in a braked state of the vehicle, the amount of work done by the clutch at the time of engagement increases to such an extent that the clutch deteriorates in durability.

That is, while the brake is on, there is no diffusion of energy resulting from movement of the vehicle (the rotational speed on an output side of the clutch remains null). Therefore, the amount of work done by the clutch at the time of engagement increases drastically, so that the durability of the clutch deteriorates. In order to obviate such a drawback, the torque-down control is performed at the time of engine restart not on condition that the accelerator is on ,but on condition that the accelerator has been turned on during a braked state of the vehicle. Thus, the amount of work in engaging the clutch is reduced and the durability of the clutch is prevented from deteriorating.

Besides, the torque-down control is performed under a special condition, namely, on condition that the vehicle is braked. In other words, in the case where the engine is restarted by turning the accelerator on while the vehicle is not braked, the torque-down control is not performed. Hence, the clutch can be engaged and the vehicle can start moving with a high responsibility, so that the driver never feels a sense of a delay in taking off in response to an operation of the accelerator.

In this case, either a regular brake (a foot brake) or a parking brake (a side brake) may be employed as means for braking the vehicle.

Not to mention the case where the driver intentionally depresses the foot brake, even when the driver depresses the accelerator pedal without realizing that the parking brake is still on, the present invention is applicable. That is, if the brake is on, there is no need to worry about a sense of inefficiency arising in the driver. Therefore, one of the conditions for performing the torque-down control is that the brake is on.

It is not specifically determined when to terminate the torque-down control. However, considering the purport of the present invention, the condition for terminating the torque-down control may be one of the following: 1) that the turning-off of the brake has been detected, 2) that the turning-off of the accelerator has been detected, 3) that the completion of engagement of the clutch has been detected, and 4) that a timer has counted up to a time point at which engagement of the clutch is estimated to be completed.

According to the first aspect of the present invention, in restarting the engine after the engine has been stopped automatically, the torque-down control is performed only when it is absolutely necessary. Therefore, it is possible to prevent the durability of the clutch from deteriorating without adversely affecting the responsibility in taking off.

Preferably, there is also provided a vehicular engine stop control device wherein an engine is stopped automatically when predetermined engine stop conditions are met and wherein the engine that has been stopped automatically is restarted when predetermined engine restart conditions are met. This vehicular engine stop control device is characterized by comprising means for detecting an engine speed and means for changing torque of the engine. The vehicular engine stop control device is further characterized in that torque-down control is performed so as to reduce torque of the engine if an engine speed at the time of restart of the engine has exceeded a predetermined value before lapse of a predetermined time period.

According to the present invention, the torque-down control of the engine is performed if the engine speed at the time of restart of the engine has exceeded the predetermined value before lapse of the predetermined time period. In this manner, the aforementioned problem can be solved.

Still further, according to the present invention, it is preferable that there is also provided a vehicular engine stop control device wherein an engine is stopped automatically when predetermined engine stop conditions are met and wherein the engine that has been stopped automatically is restarted when predetermined engine restart conditions are met. This vehicular engine stop control device is characterized by comprising means for detecting an engine speed change rate and means for changing torque of the engine. The vehicular engine stop control device is further characterized in that torque-down control is performed so as to reduce torque of the engine if an engine speed change rate at the time of restart of the engine has exceeded a predetermined value.

According to the present invention, the torque-down control of the engine is performed if the engine speed change rate at the time of restart of the engine has exceeded the predetermined value. In this manner, the aforementioned problem can be solved.

The above-mentioned preferable features of the present invention have focused on a manner in which the engine blows up. In other words, the torque-down control of the engine is performed when the engine speed starts increasing abruptly, whereby the blow-up of the engine is prevented, the amount of work in engaging the clutch is reduced, and the deterioration in durability of the clutch is prevented.

According to the above described invention, Preferably, torque-down control may be performed so as to make torque-down of the engine lower than a value corresponding to a depression amount of the accelerator.

As will be apparent from a later-described embodiment of the present invention, the aforementioned features can be combined with one another and put into practice.

### BRIEF DESCRIPTION OF THE DRAWINGS

The foregoing and further objects, features and advantages of the present invention will become apparent from the following description of a preferred embodiment with reference to the accompanying drawings, wherein:
Fig. 1 is a flowchart showing an example of contents of vehicular engine stop control according to an embodiment of the present invention;
Fig. 2 shows a system configuration of an engine driving apparatus of a vehicle to which the present invention is applied;
Fig. 3 is a skeleton view of the outline of an automatic transmission of the vehicle;
Fig. 4 shows engagement states of respective frictional engagement devices in the automatic transmission for respective shift positions;
Fig. 5 is a hydraulic circuit diagram showing an essential part of a hydraulic pressure control device for performing fast pressure-boosting control, which is one of the control operations performed in the embodiment of the present invention;
Fig. 6 shows a relationship among signals inputted to and outputted from an ECU (electronic control unit) according to the embodiment of the present invention;
Fig. 7 shows changes in engine speed when the control according to the embodiment of the present invention is performed;
Fig. 8 is a diagram showing oil supply characteristics and the like of a forward clutch along a time axis; and
Fig. 9 is a diagram showing a relationship between leak amount of oil and engine speed (rotational speed of an oil pump) according to the embodiment of the present invention.

### DETAILD DESCRIPTION OF THE PREFERRED EMBODIMENT

An embodiment of the present invention will now be described in detail with reference to the accompanying drawings.

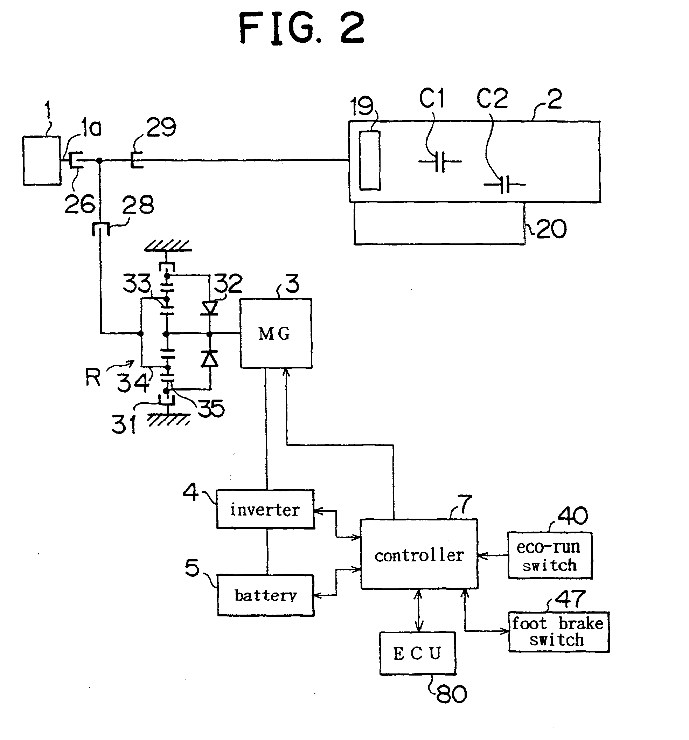

According to this embodiment, in a vehicular driving system as shown in Fig. 2, an engine is stopped automatically when predetermined stop conditions are met, and the engine that has been stopped automatically is restarted when predetermined restart conditions are met. Especially at the time of engine restart, in the case where the engine is restarted by depressing an accelerator pedal while a foot brake is depressed (in the case where the stopped engine is restarted in a state where both the accelerator pedal and the brake are depressed), engine torque is lower than a normal value (corresponding to a depression amount of the accelerator pedal ) for the protection of clutches.

Referring to Fig. 2, an engine 1 and an automatic transmission 2 are installed in a vehicle. A motor generator (MG) 3, which functions as a motor restarting the engine 1 and as a generator, is coupled to a crank shaft 1a of the engine 1 via clutches 26 and 28 and a decelerating mechanism R. By controlling engagement and disengagement of the clutch 28, the coupling state can be switched between the engine 1 and the motor generator 3. Further, an engine starter is provided separately from the motor generator 3. At the time of engine start, both the starter and the motor generator 3 may be used, or at an extremely low temperature, the starter may be used exclusively.

The decelerating mechanism R is of a planetary gear type and includes a sun gear 33, a carrier 34 and a ring gear 35. The decelerating mechanism R is interposed between the motor generator 3 and the clutch 28 via a brake 31 and a one-way clutch 32.

An oil pump 19 for the automatic transmission 2 is directly coupled to the crank shaft 1a of the engine 1 via a clutch 26 and a clutch 29. By controlling engagement and disengagement of the clutch 29, the coupling state can be switched between the engine 1 and the motor generator 3. Alternatively, as in the construction enclosed by dotted lines P in Fig. 2, an oil pump 19' may be coupled to the motor generator 3 via the clutch 27, so that oil can be supplied to the automatic transmission 2 through special inlet and outlet lines 24 and 25. Disposed in the automatic transmission 2 are a known forward clutch C1 that is engaged during a forward running state, a backward clutch C2 that is engaged during a backward running state, and the like.

An inverter 4 is electrically connected with the motor generator 3. By means of a switching operation, the inverter 4 makes it possible to change a supply of electric energy to the motor generator 3 from a battery 5 serving as a power source, so as to change a rotational speed of the motor generator 3. Further, the inverter 4 performs a switching operation so as to charge the battery 5 with electric energy from the motor generator 3.

A controller 7 performs the control for engaging and disengaging the clutches 26, 27, 28 and 29 and the control for switching the inverter 4. Signals from an automatic stop running mode (hereinafter referred to as an "eco-run mode") switch 40 and a foot brake switch 47 and the like are inputted to the controller 7. Arrows in the drawing indicate respective signal lines. Further, the controller 7 is linked with an ECU (electronic control unit) 80 that controls the engine, the automatic transmission and the like.

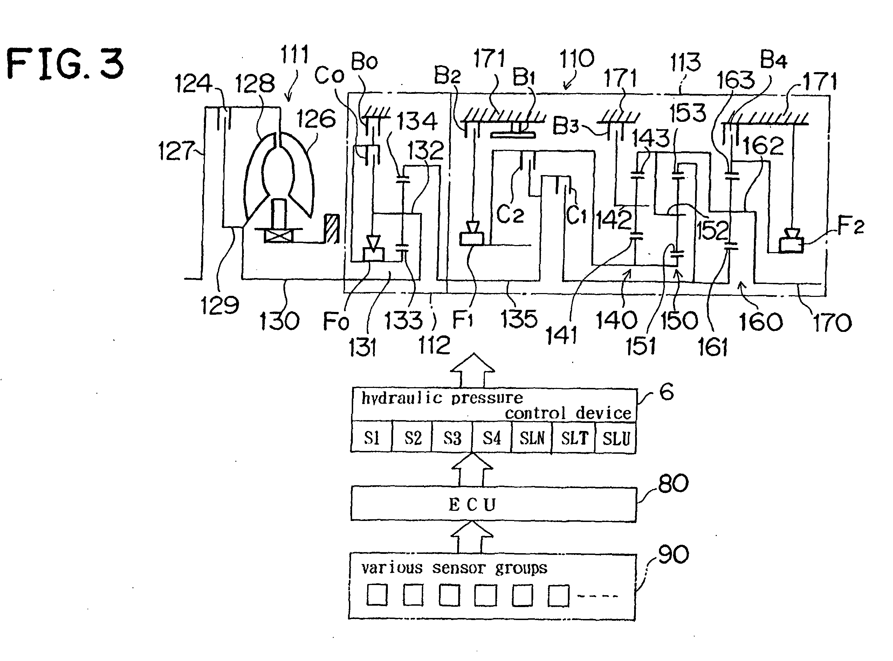

A concrete example of an automatic transmission system in the aforementioned automatic transmission 2 will now be described. Fig. 3 is a skeleton diagram of the automatic transmission 2.

The automatic transmission 2 is provided with a torque converter 111, a secondary speed-change portion 112 and a primary speed-change portion 113.

The above-mentioned torque converter 111 is provided with a lock-up clutch 124. The lock-up clutch 124 is provided between a front cover 127 that is integrated with a pump impeller 126 and a member (hub) 129 to which a turbine runner 128 is integrally attached.

The crank shaft 1a of the engine 1 is coupled to the front cover 127. An input shaft 130, which is coupled to the turbine runner 128, is coupled to a carrier 132 of an overdrive planetary gear mechanism 131 constituting the secondary speed-change portion 112.

Provided between a sun gear 133 and the carrier 132 of the planetary gear mechanism 131 are a clutch C0 and a one-way clutch F0. The one-way clutch F0 is engaged when the sun gear 133 rotates positively relative to the carrier 132 (when the sun gear 133 rotates in a rotational direction of the input shaft 130).

On the other hand, a brake B0 for selectively stopping rotation of the sun gear 133 is provided. Further, a ring gear 134, which is an output element of the secondary speed-change portion 112, is connected with an intermediate shaft 135, which is an input element of the main speed-change portion 113.

In the secondary speed-change portion 112, in a state where the clutch C0 or the one-way clutch F0 is engaged, the entire planetary gear mechanism 131 rotates integrally. Thus, the intermediate shaft 135 rotates at the same speed as the input shaft 130. Further, in a state where the sun gear 133 is stopped from rotating by engaging the brake B0, the ring gear 134 is increased in speed relative to the input shaft 130 and rotates positively. That is, a two-stage switching operation between high and low stages can be set in the secondary speed-change portion 112.

The aforementioned main speed-change portion 113 is provided with three sets of planetary gear mechanisms 140, 150 and 160. These planetary gear mechanisms 140, 150 and 160 are coupled to one another as follows.

That is, a sun gear 141 of the first planetary gear mechanism 140 is integrally coupled to a sun gear 151 of the second planetary gear mechanism 150. Besides, a ring gear 143 of the first planetary gear mechanism 140, a carrier 152 of the second planetary gear mechanism 150 and a carrier 162 of the third planetary gear mechanism 160 are coupled to one another. Further, an output shaft 170 is coupled to the carrier 162 of the third planetary gear mechanism 160. Furthermore, a ring gear 153 of the second planetary gear mechanism 150 is coupled to a sun gear 161 of the third planetary gear mechanism 160.

In a gear train of the main speed-change portion 113, one backward stage and four forward stages can be set, and clutches and brakes therefor are provided as follows.

Namely, the forward clutch C1 is provided between the intermediate shaft 135 on one hand and the ring gear 153 of the second planetary gear mechanism 150 and the sun gear 161 of the third planetary gear mechanism 160 on the other hand. Further, a clutch C2 that is engaged on the backward stage is provided between the intermediate shaft 135 on one hand and the sun gear 141 of the first planetary gear mechanism 140 and the sun gear 151 of the second planetary gear mechanism 150 on the other hand.

A brake B1 that stops rotation of the sun gear 141 of the first planetary gear mechanism 140 and the sun gear 151 of the second planetary gear mechanism 150 is disposed. Further, a one-way clutch F1 and a brake B2 are arranged in series between the sun gears 141 and 151 and a casing 171. The one-way clutch F1 is engaged when the sun gears 141 and 151 are about to rotate reversely (opposite to a rotational direction of the input shaft 135).

A brake B3 is provided between a carrier 142 of the first planetary gear mechanism 140 and the casing 171. Further, a brake B4 and a one-way clutch F2, which are elements for stopping a ring gear 163 of the third planetary gear mechanism 160, are arranged in parallel and opposite to the casing 171. The one-way clutch F2 is engaged when the ring gear 163 is about to rotate reversely.

As a result, the aforementioned automatic transmission 2 is capable of performing speed-change operations among one backward stage and five forward stages.

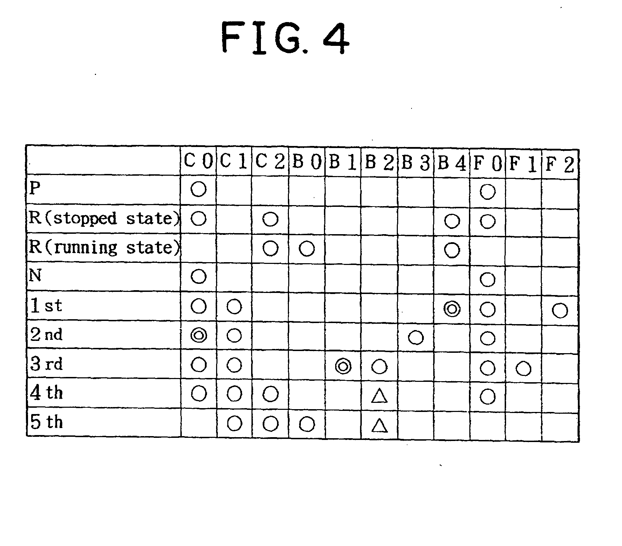

Fig. 4 shows an engagement operation chart of respective clutches and brakes (frictional engagement devices) for setting these speed-change stages. Referring to Fig. 4, ○ represents an engagement state, ⓞ represents an engagement state that is established only when engine brake should be ensured, Δ represents an engagement state that is established regardless of power transmission, and a blank represents a release state.

Referring back to Fig. 3, solenoid valves S1, S2, S3, S4, SLN, SLT and SLU in a hydraulic pressure control device 6 are drivingly controlled based on instructions from the ECU 80, whereby the respective clutches and brakes (frictional engagement devices) are engaged or released.

It is to be noted herein that S1, S2 and S3 denote solenoid valves for shifting operation, S4 denotes a solenoid valve for engine brake operation, SLN denotes a solenoid valve for controlling back pressure of an accumulator, SLT denotes a solenoid valve for controlling line pressure, and SLU denotes a solenoid valve for lock-up operation.

The ECU 80 is linked with the controller 7 for the aforementioned motor generator 3. Signals from various sensor groups 90 are inputted to the ECU 80, which then controls the solenoid valves and the like, so that the respective clutches and brakes (frictional engagement devices) can be engaged or released.

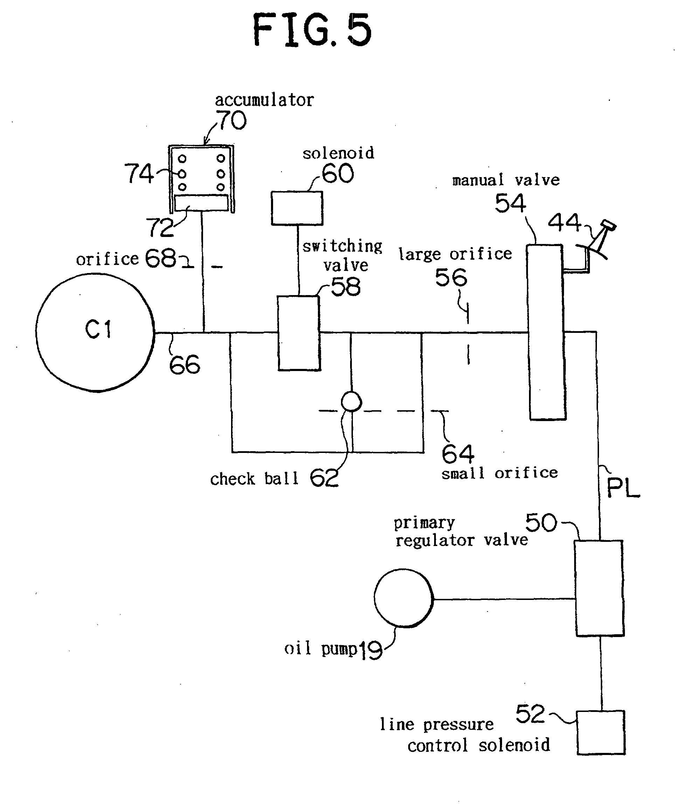

A construction for engaging the forward clutch C1 in the above-mentioned automatic transmission 2 will now be described. Fig. 5 is a hydraulic circuit diagram showing an essential part of the construction for engaging the forward clutch C1 in the hydraulic control device of the automatic transmission. Because the same construction can also be applied to the backward clutch C2, the description thereof will be omitted.

A line pressure control solenoid 52 controls a primary regulator valve 50, which adjusts an original pressure generated by the oil pump 19 to a line pressure PL. The line pressure PL is transmitted to a manual valve 54. The manual valve 54 is mechanically connected with a shift lever 44. In this case, the manual valve 54 transmits the line pressure PL to the forward clutch C1 when a forward position such as a D-position, a first (L) or second manual position or the like is selected.

A large orifice 56 and a switching valve 58 are interposed between the manual valve 54 and the forward clutch C1. A solenoid 60 controls the switching valve 58, which then selectively supplies oil that has passed through the large orifice 56 to the forward clutch C1 or shuts the oil off.

Bypassing the switching valve 58, a check ball 62 and a small orifice 64 are arranged in parallel. When the switching valve 58 is shut off by the solenoid 60, the oil that has passed through the large orifice 56 reaches the forward clutch C1 via the small orifice 64. The check ball 62 functions such that hydraulic fluid in the forward clutch C1 is drained smoothly.

An accumulator 70 is disposed in an oil path 66 between the switching valve 58 and the forward clutch C1 via the orifice 68. The accumulator 70, which is provided with a piston 72 and a spring 74, functions such that when oil is supplied to the forward clutch C1, a certain hydraulic pressure determined by the spring 74 is maintained for a while. Thus, the accumulator 70 attenuates a shock generated substantially upon engagement of the forward clutch C1.

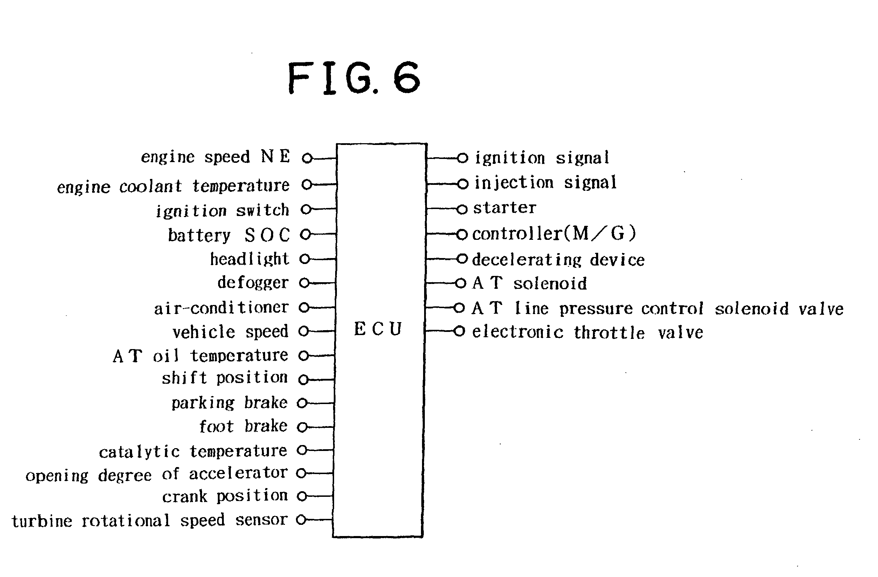

Fig. 6 shows how signals are inputted to or outputted from the ECU 80.

Various signals shown on the left side of Fig. 6, such as signals regarding an engine speed NE, an engine coolant temperature and a state of an ignition switch, signals regarding an amount SOC (state of charge) of electricity stored in the battery and a state of a headlight, ON/OFF signals of a defogger, ON/OFF signals of an air-conditioner, signals regarding a vehicle speed, an AT oil temperature and a shift position, ON/OFF signals of a parking brake, ON/OFF signals of the foot brake, signals regarding a catalyst temperature and an opening degree of the accelerator pedal, signals regarding a position of the crank shaft, signals from a turbine rotational speed sensor 81 of the torque converter, and the like are inputted to the ECU 80. Further, the ECU 80 outputs various signals shown on the right side of Fig. 6, such as ignition signals, injection signals, signals to the starter, signals to the controller 7 for the motor generator, signals to the decelerating mechanism, signals to the AT solenoid, signals to the AT line pressure control solenoid, and signals to an electronic throttle valve.

The operation of the aforementioned hardware structure will now be explained.

At the time of engine start, the clutches 26 and 28 are engaged, and the motor generator 3 is driven to start the engine 1 (although the starter may be used together with the motor generator or the starter may be used exclusively, such cases will not be described). By turning the brake 31 on at this time, rotations of the motor generator 3 are decelerated and transmitted from the sun gear 33 to the carrier 34 of the decelerating mechanism R. Thus, even if capacitance values of the motor generator 3 and the inverter 4 are set small, a driving force necessary for cranking the engine 1 can be ensured. After the engine 1 has been started, the motor generator 3 functions as a generator. For example, the motor generator 3 stores electric energy in the battery 5 in braking the vehicle.

At the time of engine start, the controller 7 detects a rotational speed of the motor generator 3 and outputs a switching signal to the inverter 4 such that the motor generator 3 achieves torque and rotational speed that are necessary to start the engine 1. For example, if the air-conditioner is on at the time of engine start, larger torque is required in comparison with the case where the air-conditioner is off. Hence, the controller 7 outputs a switching signal such that the motor generator 3 can rotate with large torque and at a high rotational speed.

If the predetermined engine stop conditions are met when an eco-run mode signal is on, the controller 7 outputs a signal for cutting fuel supply to the engine 1, thereby automatically stopping the engine. The eco-run mode signal is inputted to the controller 7 when a driver presses an eco-run switch 40 provided in a vehicle compartment.

For example, the conditions for automatically stopping the engine in the eco-run mode are:
(a) that the shift position is N- or D-position;
(b) that the vehicle speed is zero;
(c) that the accelerator is off; and
(d) the foot brake is on.

When all the set conditions are met, the engine can be stopped automatically.

If the engine restart conditions are met after the engine has been stopped automatically, the engine is restarted. The present invention is applied to the control in restarting the engine. The software structure of this embodiment will now be described. It is to be noted herein that the forward clutch C1 (the predetermined clutch) is engaged immediately after the engine restart.

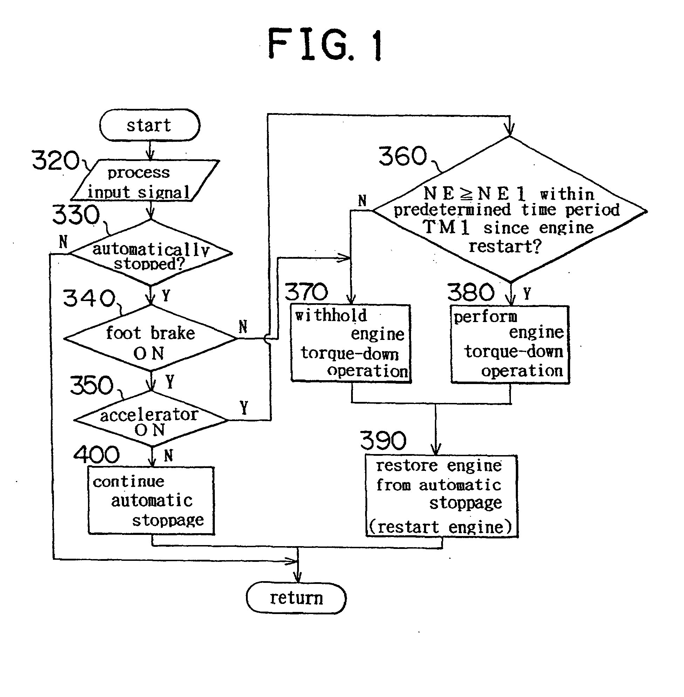

Fig. 1 is a flowchart indicating contents of a sub-routine processing that is carried out from the automatic stop of the engine to the restart thereof. The following description will be made with reference to this flowchart. This sub-routine is defined as one of a plurality of sub-routines included in a main routine.

Upon entering the sub-routine for restarting the engine, first of all, various processings for input signals are performed (in step 320). Then, it is determined in step 330 whether or not the engine has been stopped automatically. If the engine has not been stopped automatically, the process returns to the main routine immediately.

If the engine has been stopped automatically, it is determined in steps 340 and 350 whether or not the conditions for restarting the engine are met. In this case, the conditions for restarting the engine are that the accelerator is on or that the foot brake is off. Besides, the engine is automatically restored when the vehicle speed ≠ 0 or when the amount SOC of electricity stored in the battery has become scarce.

The outline of the control in restarting the engine will be described below. Basically, in the case where the engine is restarted on condition that the foot brake is off, the engine is restarted without being subjected to torque-down operation. In the case where the engine is restarted on condition that the accelerator is on while the foot brake is on, that is, in the case where the engine is restarted when both the accelerator pedal and the brake pedal are depressed, the engine is restarted while being subjected to the torque-down operation. Thus, it is possible to obviate a problem of a deterioration in durability of the clutch under a special condition in which both the accelerator pedal and the brake pedal are depressed.

Concrete explanations will be given hereinafter according to the flowchart. In restarting the engine when the foot brake is off, the process proceeds from step 340 to step 370, where the torque-down operation of the engine is withheld. The engine restart control is then performed (in step 390). The engine restart control performed in step 390 includes the initial engine start control and the subsequent clutch pressure control.

If the foot brake is on, the process proceeds from step 340 to step 350, where it is determined whether the accelerator is on or off. If the accelerator is off (if the accelerator pedal has not been depressed), the conditions for restarting the engine are not met. Therefore, in step 400, the automatic stop control (the automatic stop of the engine) is continued.

Further, if the foot brake is on and the accelerator is on (if both the accelerator pedal and the brake pedal have been depressed), the process proceeds to step 360, where the engine speed NE is checked for confirmation. It is determined herein whether or not the engine speed NE has reached a predetermined value NE1, namely, whether or not "NE ≥ NE1" within a predetermined time period TM1 after restart of the engine. If the process has proceeded to step 360 for the first time, the engine is started for the first time (before it is restarted). Therefore, the result in step 360 is negative. Thus, the process proceeds to step 370, where the engine torque-down operation is withheld. The process then proceeds to step 390, where the engine is restarted.

In the subsequent processings, the clutch pressure control is performed. That is, it is determined in step 360 how much the engine speed NE has risen. In step 360, if NE has become equal to or larger than NE1 within the predetermined time period TM1, it is determined that the engine has blown up. The process then proceeds to step 380, where the torque-down control of the engine is performed. Thereafter, the process proceeds to step 390.

Although the engine speed NE is monitored in step 360, it is also possible to monitor an engine speed change rate ΔNE. In other words, if the engine speed change rate ΔNE has become equal to or larger than a predetermined value ΔNE1, it can be determined that the engine speed NE has risen sharply, namely, that the engine has blown up.

Examples of concrete known methods of performing the torque-down control of the engine will be mentioned below.
(a) By means of the electronic throttle, the opening degree of the throttle valve is controlled independently of an operation amount of the accelerator. By setting the opening degree of the throttle valve slightly smaller than a value corresponding to the operation amount of the accelerator, the engine torque is reduced.
(b) By means of ignition timing retard control of the engine, the fuel injection timing is offset from its optimal value, so that the engine torque is made smaller than usual.
(c) By means of fuel cut, the engine torque is made smaller than usual.

By preventing the engine torque from increasing using those known methods, even in a circumstance where the rising of a hydraulic pressure in the clutch tends to be retarded, the forward clutch C1 can be engaged at a low engine speed. Hence, it becomes possible to inhibit a deterioration in durability of the clutch resulting from an increase in work at the time of engagement.

If the engine is restarted on a condition other than the turning-on of the foot brake and the accelerator, the torque-down operation of the engine is withheld. Hence, at the time of takeoff, the delay based on the torque-down operation never arises. Further, the torque-down operation is suspended if the torque-down conditions are not met, that is, if the foot brake is released. Accordingly, no delay occurs in releasing the brake for takeoff.

The time period for carrying out the torque-down operation may be limited to what is estimated to be a time period from the restart of the engine to the completion of engagement of the forward clutch C1.

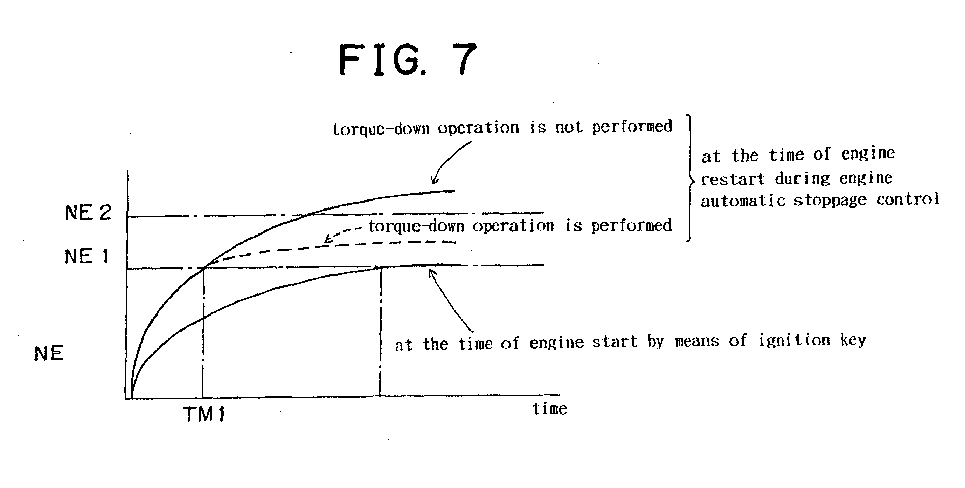

Fig. 7 shows changes in the engine speed NE. Herein, Fig. 7 shows a case where the torque-down operation is performed in restarting the engine after the engine stop control, a case where the torque-down operation is not performed in restarting the engine after the engine stop control, and a case where the engine is started by means of an ignition key. In the case where the engine speed NE has reached NE1 within the predetermined time period TM1 after the restart of the engine following the automatic stoppage of the engine, if the torque-down control is performed, the engine speed NE is below a permissible value NE2, which is considered to be unharmful to durability of the clutches. However, unless the torque-down control is performed, the engine speed exceeds the permissible value NE2. If the forward clutch C1 is engaged in this state, the durability of the clutch C1 deteriorates. In order to avoid such a problem, the torque-down control is performed so as to prevent a deterioration in durability of the forward clutch C1.

A method of performing the clutch pressure control in automatically restarting the engine will now be described.

In a vehicle where such automatic stop control of the engine is performed, the engine is restarted when a driver shows the intention of driving the vehicle, for example, by releasing the brake pedal or depressing the accelerator pedal. In this case, if the shift position is a running position, the clutch needs to be engaged immediately.

As described previously, if the engine is stopped, the oil pump is also stopped. Thus, the oil that has been supplied to the forward clutch C1 leaks out from the hydraulic path, thereby causing a drop in hydraulic pressure. Therefore, in restarting the engine, the control is performed so as to engage the clutch rapidly. The details of such control will be explained below.

In this control, in order to engage the forward clutch C1 as soon as possible at the time of engine restart, fast pressure-boosting control (fast apply control) is performed during an early period of oil supply to the forward clutch C1.

To be more specific, at the time of starting oil supply, the fast pressure-boosting control is programmed such that the control is performed for a predetermined time period including zero. The predetermined time period is changed or determined depending on an amount of oil leaking out from the hydraulic path of the above-mentioned clutch C1 or an oil temperature of the automatic transmission. The time period for performing the fast pressure-boosting control is changed depending on a leak amount of oil or an oil temperature because of the following reason. That is, in engaging the clutch, the engine speed has already started rising. Hence, unless the fast pressure-boosting control is performed suitably, a great engagement shock may be caused in engaging the forward clutch C1.

Especially, the time period for performing the fast pressure-boosting control is changed depending on a leak amount of oil. This is because if the fast pressure-boosting control is performed in a state where oil has not completely leaked out from the hydraulic path of the forward clutch C1, for example, when the engine is restarted immediately after stoppage thereof, the clutch C1 is engaged abruptly and causes a great shock.

Further, the time period for performing the fast pressure-boosting control is changed depending on an oil temperature because of the following reason. That is, the viscosity of oil changes in accordance with changes in oil temperature. Thus, even if the fast pressure-boosting control is performed for the same time period, the manner in which oil is supplied differs depending on the oil temperature.

In short, the "fast pressure-boosting control" mentioned herein means control for increasing a feed rate of oil that is supplied to the forward clutch C1 (the predetermined clutch). In order to perform the fast pressure-boosting control, various constructions can be employed. For example, the degree of throttle of a throttle passage in the hydraulic path leading to the clutch may be reduced temporarily. Instead, the throttle passage may be provided with a bypass passage through which oil is supplied to the clutch at appropriate timings. Alternatively, a pressure control value of the primary regulator valve (the valve for adjusting a line pressure) may be temporarily set to a relatively high level.

Referring to Fig. 5, upon restart of the engine, the oil pump 19 starts rotating and oil is supplied to the side of the primary regulator valve 50. A line pressure adjusted by the primary regulator valve 50 is eventually transmitted to the forward clutch C1 via the manual valve 54.

When the solenoid 60 opens the switching valve 58 after having received a command from the controller 7 to perform the fast pressure-boosting control, the line pressure PL that has been transmitted through the manual valve 54 is then supplied directly to the forward clutch C1 through the large orifice 56. While the fast pressure-boosting control is performed, the accumulator 70 is out of operation due to the setting of a spring constant of the spring 74.

Then, if the solenoid 60 shuts off the switching valve 58 after having received a command from the controller 7 to terminate the fast pressure-boosting control, the line pressure PL that has been transmitted through the large orifice 56 is slowly supplied to the forward clutch C1 through the small orifice 64. In this stage, a comparatively high pressure is supplied to the forward clutch C1. Therefore, a hydraulic pressure in the oil path 66 leading to the accumulator 70 moves the piston 72 upwards in Fig. 5 against the spring 74. As a result, while the piston 72 is in movement, the hydraulic pressure supplied to the forward clutch C1 is temporarily stopped from being raised, whereby the forward clutch C1 can be engaged very smoothly.

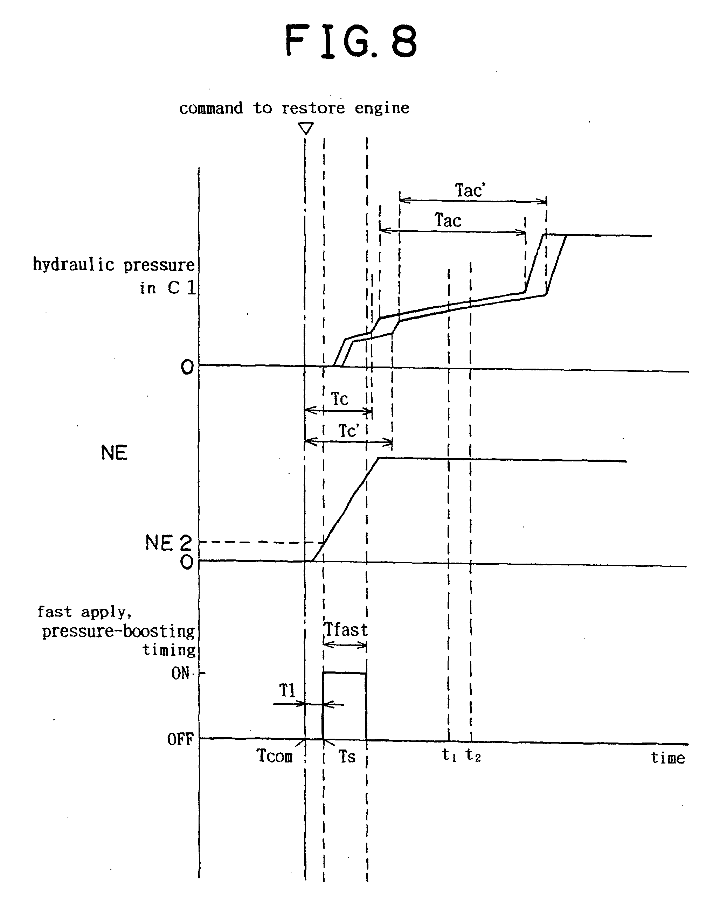

Fig. 8 shows characteristics of a hydraulic pressure supplied to the forward clutch C1. Referring to Fig. 8, a thin line represents a case where the fast pressure-boosting control has not been performed, and a thick line represents a case where the fast pressure-boosting control has been performed. Further, a section marked with Tfast indicates a (predetermined) time period during which the fast pressure-boosting control is performed. Qualitatively, the time period Tfast corresponds to a time period during which a piston (not shown) of the forward clutch C1 loads what is called a clutch pack. Also, the time period Tfast is made to correspond to a time period that ends slightly before the engine speed NE reaches a predetermined idling speed. Tc and Tc' correspond to a time period during which the clutch pack of the forward clutch C1 is loaded, and Tac and Tac' correspond to a time period during which the accumulator 70 is in operation.

If the fast pressure-boosting control is not performed, oil is supplied through a route bypassing the switching valve 58. Hence, a comparatively long time period Tc' elapses until the clutch pack of the piston of the forward clutch C1 is loaded. Following the thin line shown in Fig. 8, the engagement is completed approximately at a time point t2. However, according to this embodiment, the fast pressure-boosting control is performed for the suitable time period Tfast. Accordingly, the engagement of the forward clutch C1 can be completed approximately at a time point t1 without causing a great shock.

As is apparent from Fig. 8, a timing Ts for starting the fast pressure-boosting control is set to a timing at which the engine speed NE (= the rotational speed of the oil pump 19) has reached the predetermined value NE2. In other words, the fast pressure-boosting control is started if it is determined that the engine speed NE has become higher than the predetermined value NE2.

Thus, the fast pressure-boosting control is not started simultaneously with a command Tcom to restart the engine. In addition, instead of using a timer, the timing for starting the fast pressure-boosting control is set based on the engine speed NE. This is because a time period T1 required for the engine speed NE of the engine 1 to rise slightly above zero (to reach about NE2) changes greatly depending on circumstances in which the vehicle travels.

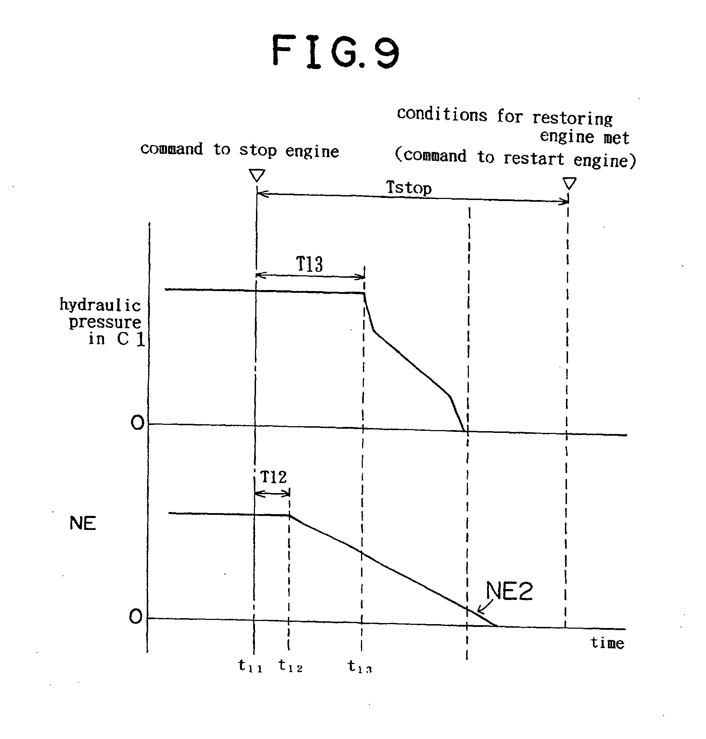

Fig. 9 shows a relationship between characteristics for draining hydraulic fluid from the forward clutch C1 and engine speed NE (= rotational speed of the oil pump).

In this embodiment, if a command to stop the engine is output at a time point t11, the engine speed NE starts dropping gradually at a time point t12, with a slight delay T12.

On the other hand, as for the drain characteristics of the forward clutch C1, after a command to stop the engine 1 has been output at the time point t11 (even if the rotational speed of the oil pump 19 has dropped in the same manner as the engine speed NE), a hydraulic pressure in the forward clutch C1 is maintained as it is for a slightly longer time period T13. Then, the hydraulic pressure starts falling abruptly at a time point t13.

On condition that the oil temperature remains unchanged, such characteristics exhibit a relatively high degree of reproducibility for various vehicles. Thus, if it is clear how much time has elapsed after the issuance of a command to stop the engine, it is possible to estimate how much oil has currently leaked out from the hydraulic path 66.

Accordingly, while taking the characteristics as shown in Fig. 9 into account, the (predetermined) time period Tfast for performing the fast pressure-boosting control is changed or determined based on a time period Tstop that starts with the issuance of a command to stop the engine and ends with the issuance of a command to restart the engine. Thus, even if the engine has been restarted immediately after automatic stoppage thereof, the fast pressure-boosting control is performed in accordance with a leak amount of oil at the time of engine restart. Therefore, it is possible to limit an engagement shock to its minimum possible level. The time period may be set by considering both the leak amount of oil and the oil temperature. This is because the viscosity of oil changes depending on the oil temperature.

In the aforementioned embodiment, the torque-down operation of the engine is performed in the case where the engine is restarted on condition that the accelerator has been turned on while the foot brake is on. However, the torque-down operation of the engine may be performed in the case where the engine is restarted on condition that the accelerator has been turned on while the parking brake is on. That is, the torque-down control may be performed in the case where the engine is restarted on condition that the accelerator has been turned on while some sort of braking force is applied to the vehicle.

Alternatively, regardless of whether the brake is on or off, the torque-down operation may be performed if a blow-up of the engine has been detected at the time of engine restart. In this case, the occurrence of a blow-up of the engine may be detected based on the engine speed NE as shown in step 360 in Fig. 1 or based on the engine speed change rate ΔNE.

While the present invention has been described with reference to what is presently considered to be a preferred embodiment thereof, it is to be understood that the present invention is not limited to the disclosed embodiment or construction. On the contrary, the present invention is intended to cover various modifications and equivalent arrangements. Various elements of the disclosed invention are shown in various combinations and configurations, which are exemplary.

In a vehicular engine stop control device wherein an engine (1) is stopped. automatically when predetermined engine stop conditions are met and wherein the engine (1) that has been stopped automatically is restarted when predetermined engine restart conditions are met, torque-down control of the engine (1) is performed (step 380) only when the engine (1) is restarted on condition (steps 340 and 350) that an accelerator has been turned on while a foot brake is on. Thus, it is possible to prevent a deterioration in durability of a clutch (C1) without adversely affecting responsibility at the time of take-off.

## Claims

1. A vehicular engine stop control device wherein an engine (1) is stopped automatically when predetermined engine stop conditions are met and wherein the engine (1) that has been stopped automatically is restarted when predetermined engine restart conditions are met,
**characterized in that**
the vehicular engine stop control device is provided with means (80) for detecting whether or not the engine restart results from turning-on of an accelerator, means (80) for detecting whether or not vehicle is braked, and means for changing torque of the engine; and
that torque-down control is performed so as to reduce torque of the engine (1) in a case where the engine (1) is restarted when one of the predetermined engine restart conditions is met, namely, on condition that the accelerator is on while the vehicle is braked.

2. The vehicular engine stop control device according to claim 1,
**characterized in that**
if it is determined that the vehicle is not braked during the torque-down control, the torque-down control is terminated.

3. The vehicular engine stop control device according to claim 1,
**characterized in that**

4. A vehicular engine stop control device according to claim 1,
**characterized in that**
the vehicular engine stop control device is provided with means (80) for detecting an engine speed; and
that torque-down control is performed so as to reduce torque of the engine (1) if an engine speed at the time of restart of the engine (1) has exceeded a predetermined value before lapse of a predetermined time period. if the accelerator is turned off during the torque-down control, the torque-down control is terminated.

5. A vehicular engine stop control device according to claim 1,
**characterized in that**
the vehicular engine stop control device is provided with means (80) for detecting an engine speed change rate; and
that torque-down control is performed so as to reduce torque of the engine (1) if an engine speed change rate at the time of restart of the engine (1) has exceeded a predetermined value.

6. The vehicular engine stop control device according to any of claims 1, 4 and 5,
**characterized in that**
the vehicular engine stop control device is provided with a predetermined clutch (C1) which is engaged at the time of the engine restart and to which torque is transmitted from the engine (1) and means (80) for detecting whether or not the clutch (C1) is engaged; and
that if it is determined during the torque-down control that the clutch (C1) is engaged, the torque-down control is terminated.

7. The vehicular engine stop control device according to any of claims 1, 4 and 5,
**characterized in that**
the vehicular engine stop control device is provided with a predetermined clutch (C1) which is engaged at the time of the engine restart and to which torque is transmitted from the engine (1); and
that the torque-down control is terminated if a predetermined time period that is considered to be necessary for engagement of the clutch (C1) has elapsed since the engine restart.

8. A vehicular engine stop control method wherein an engine (1) is stopped automatically when predetermined engine stop conditions are met and wherein the engine (1) that has been stopped automatically is restarted when predetermined engine restart conditions are met,
**characterized in that**
torque of the engine (1) is reduced if it is determined that the engine (1) has been restarted an condition that the accelerator is on while a vehicle is braked.

9. A vehicular engine stop control method according to claim 8,
**characterized in that**
an engine speed at the time of restart of the engine (1) is detected; and
that torque of the engine (1) is reduced if the engine speed has exceeded a predetermined value before lapse of predetermined time period.

10. A vehicular engine stop control method according to claim 8,
**characterized in that**
an engine speed change rate at the time of restart of the engine (1) is detected; and
that torque of the engine (1) is reduced if the engine speed change rate has exceeded a predetermined value.

## Patentansprüche

1. Fahrzeugmotoranhalteregelungsvorrichtung, wobei ein Motor (1) automatisch angehalten wird, wenn vorbestimmte Motoranhaltebedingungen erfüllt sind, und wobei der Motor (1), der angehalten wurde, neu gestartet wird, wenn vorbestimmte Motorheustartbedingungen erfüllt sind,
**dadurch gekennzeichnet dass**
die Fahrzeugmotoranhalteregelungsvorrichtung mit einer Einrichtung (80) bereitgestellt ist, um zu erfassen, ob der Motorneustart sich aus dem Einschalten eines Beschleunigers ergibt oder nicht, einer Einrichtung (80), um zu erfassen, ob das Fahrzeug gebremst ist oder nicht, und einer Einrichtung zum Ändern des Motormoments; und
dass eine Moment-hinunter-Regelung ausgeführt wird, um so das Moment des Motors (1) in einem Fall zu verringern, bei dem der Motor (1) neugestartet wird, wenn eine der vorbestimmten Motorneustartbedingungen erfüllt ist, nämlich unter der Bedingung, dass der Beschleuniger eingeschaltet ist, während das Fahrzeug gebremst ist.

2. Fahrzeugmotoranhalteregelungsvorrichtung gemäß Anspruch 1,
**dadurch gekennzeichnet dass**
die Moment-hinunter-Regelung beendet wird, wenn ermittelt wird, dass das Fahrzeug während der Moment-hinunter-Regelung nicht gebremst wird.

3. Fahrzeugmotoranhalteregelungsvorrichtung gemäß Anspruch 1,
**dadurch gekennzeichnet dass**
die Moment-hinunter-Regelung beendet wird, wenn der Beschleuniger während der Moment-hinunter-Regelung abgeschaltet wird.

4. Fahrzeugmotoranhalteregelungsvorrichtung gemäß Anspruch 1,
**dadurch gekennzeichnet dass**
die Fahrzeugmotoranhalteregelungsvorrichtung mit einer Einrichtung (80) zum Erfassen einer Motordrehzahl bereitgestellt ist; und
dass die Moment-hinunter-Regelung durchgeführt wird, um so das Moment des Motors (1) zu verringern, wenn eine Motordrehzahl zum Zeitpunkt des Neustarts des Motors (1) vor dem Verstreichen eines vorbestimmten Zeitraums einen vorbestimmten Wert überschritten hat.

5. Fahrzeugmotoranhalteregelungsvorrichtung gemäß Anspruch 1,
**dadurch gekennzeichnet dass**
die Fahrzeugmotoranhalteregelungsvorrichtung mit einer Einrichtung (80) zum Erfassen einer Drehzahländerungsrate bereitgestellt ist; und
dass die Moment-hinunter-Regelung durchgeführt wird, um so das Moment des Motors (1) zu verringern, wenn eine Motordrehzahländerungsrate zum Zeitpunkt des Neustarts des Motors (1) einen vorbestimmten Wert überschritten hat.

6. Fahrzeugmotoranhalteregelungsvorrichtung gemäß jedem der Ansprüche 1, 4 und 5,
**dadurch gekennzeichnet dass** die Fahrzeugmotoranhalteregelungsvorrichtung mit einer vorbestimmten Kupplung (C1) bereitgestellt ist, die zu dem Zeitpunkt des Motorneustarts in Eingriff ist und auf die von dem Motor (1) ein Moment übertragen wird, und mit einer Einrichtung (80) zum Erfassen, ob die Kupplung (C1) im Eingriff ist oder.nicht; und
dass die Moment-hinunter-Regelung beendet wird, wenn während der Moment-hinunter-Regelung ermittelt wird, dass die Kupplung (C1) im Eingriff ist.

7. Fahrzeugmotoranhalteregelungsvorrichtung gemäß jedem der Ansprüche 1, 4 und 5,
**dadurch gekennzeichnet dass**
die Fahrzeugmotoranhalteregelungsvorrichtung mit einer vorbestimmten Kupplung (C1) bereitgestellt ist, die zu dem Zeitpunkt des Motorneustarts in Eingriff ist und auf die von dem Motor (1) ein Moment übertragen wird; und
dass die Moment-hinunter-Regelung beendet wird, wenn ein vorbestimmter Zeitraum seit dem Motorneustart verstrichen ist, der als notwendig zum Eingreifen der Kupplung (1) berücksichtigt wurde.

8. Fahrzeugmotoranhalteregelungsverfahren, wobei ein Motor (1) automatisch angehalten wird, wenn vorbestimmte Motoranhaltebedingungen erfüllt sind, und wobei der Motor (1), der angehalten wurde, automatisch neugestartet wird, wenn vorbestimmte Motorneustartbedingungen erfüllt sind,
**dadurch gekennzeichnet dass**
das Moment des Motors (1) reduziert wird, wenn ermittelt wird, dass der Motor (1) unter der Bedingung neugestartet wurde, dass der Beschleuniger eingeschaltet ist, während ein Fahrzeug gebremst wird.

9. Fahrzeugmotoranhalteregelungsverfahren gemäß Anspruch 8,
**dadurch gekennzeichnet dass**
eine Motordrehzahl zum Zeitpunkt des Neustarts des Motors (1) erfasst wird; und
dass das Moment des Motors (1) reduziert wird, wenn die Motordrehzahl vor dem Verstreichen eines vorbestimmten Zeitraums einen vorbestimmten Wert überschritten hat.

10. Fahrzeugmotoranhalteregelungsverfahren gemäß Anspruch 8,
**dadurch gekennzeichnet dass**
eine Motordrehzahländerungsrate zu dem Zeitpunkt des Neustarts des Motors (1) erfaßt wird; und
dass das Moment des Motors (1) reduziert wird, wenn die Drehzahländerungsrate einen vorbestimmten Wert überschritten hat.

## Revendications

1. Dispositif de réglage d'arrêt de moteur de véhicule dans lequel un moteur (1) est arrêté automatiquement lorsque des conditions d'arrêt prédéterminées du moteur sont remplies et dans lequel le moteur (1) qui a été arrêté automatiquement est redémarré lorsque les conditions de redémarrage prédéterminées du moteur sont remplies,
**caractérisé en ce que**
le dispositif de réglage d'arrêt de moteur de véhicule est doté d'un moyen (80) destiné à détecter si le moteur redémarre ou non suite à une sollicitation d'un accélérateur, d'un moyen (80) destiné à détecter si le véhicule est freiné ou non et d'un moyen destiné à changer le couple du moteur, et
que le réglage de diminution de couple est effectué de manière à réduire le couple du moteur (1) dans le cas où le moteur (1) est redémarré lorsque l'une des conditions de redémarrage prédéterminées du moteur est remplie, à savoir, à condition que l'accélérateur soit sollicité alors que le véhicule est freiné.

2. Dispositif de réglage d'arrêt de moteur de véhicule selon la revendication 1,
**caractérisé en ce que**
s'il est déterminé que le véhicule n'est pas freiné lors du réglage de diminution de couple, le réglage de diminution de couple est terminé.

3. Dispositif de réglage d'arrêt de moteur de véhicule selon revendication 1,
**caractérisé en ce que**
si l'accélérateur n'est plus sollicité lors du réglage de diminution de couple, le réglage de diminution de couple est terminé.

4. Dispositif de réglage d'arrêt de moteur de véhicule selon revendication 1,
**caractérisé en ce que**
le dispositif de réglage d'arrêt de moteur de véhicule est doté d'un moyen (80) destiné à détecter la vitesse du moteur ; et
que le réglage de diminution de couple est effectué de manière à réduire le couple du moteur (1), si la vitesse du moteur au moment du redémarrage du moteur (1) a dépassé une valeur prédéterminée avant écoulement d'une durée prédéterminée.

5. Dispositif de réglage d'arrêt de moteur de véhicule selon revendication 1,
**caractérisé en ce que**
le dispositif de réglage d'arrêt de moteur de véhicule est doté d'un moyen (80) destiné à détecter un coefficient de changement de vitesse du moteur ; et
que le réglage de diminution de couple est effectué de manière à réduire le couple du moteur (1) si le coefficient de changement de vitesse du moteur au moment du redémarrage du moteur (1) a dépassé une valeur prédéterminée.

6. Dispositif de réglage d'arrêt de moteur de véhicule selon l'une quelconque des revendications 1, 4 et 5,
**caractérisé en ce que**
le dispositif de réglage d'arrêt de moteur de véhicule est doté d'un embrayage prédéterminé (C1) qui est engagé au moment du redémarrage du moteur et auquel le couple est transmis par le moteur (1) et le moyen (80) destiné à détecter si oui ou non l'embrayage (C1) est engagé ; et
que, s'il est déterminé, pendant le réglage de diminution de couple, que l'embrayage (C1) est engagé, le réglage de diminution de couple est terminé.

7. Dispositif de réglage d'arrêt de moteur de véhicule selon l'une quelconque des revendications 1, 4 et 5,
**caractérisé en ce que**
Le dispositif de réglage d'arrêt de moteur de véhicule est doté d'un embrayage prédéterminé (C1) qui est engagé au moment du redémarrage du moteur et auquel le couple est transmis par le moteur (1) ; et
que le réglage de diminution de couple est terminé si une durée prédéterminée qui est considérée être nécessaire à l'engagement de l'embrayage (C1) s'est écoulée depuis le redémarrage du moteur.

8. Procédé de réglage d'arrêt de moteur de véhicule dans lequel un moteur (1) est arrêté automatiquement lorsque les conditions d'arrêt prédéterminées du moteur sont remplies et dans lequel le moteur (1) qui a été arrêté automatiquement est redémarré lorsque les conditions de redémarrage prédéterminées du moteur sont remplies,
**caractérisé en ce que**
le couple du moteur (1) est réduit s'il est déterminé que le moteur (1) a été redémarré à condition que l'accélérateur soit sollicité alors que le véhicule est freiné.

9. Dispositif de réglage d'arrêt de moteur de véhicule selon revendication 8,
**caractérisé en ce que**
une vitesse du moteur au moment du redémarrage du moteur (1) est détectée ; et
que le couple du moteur (1) est réduit si la vitesse du moteur a dépassé une valeur prédéterminée avant écoulement de la durée prédéterminée.

10. Procédé de réglage d'arrêt de moteur de véhicule selon revendication 8,
**caractérisé en ce que**
un coefficient de changement de vitesse du moteur au moment du redémarrage du moteur (1) est détecté ; et
que le couple du moteur (1) est réduit si le coefficient de changement de vitesse du moteur a dépassé une valeur prédéterminée.
